(19) **Europäisches Patentamt / European Patent Office / Office européen des brevets**

(11) **EP 2 493 094 B1**

(12) **EUROPEAN PATENT SPECIFICATION**

(45) Date of publication and mention
of the grant of the patent:
**27.11.2013 Bulletin 2013/48**

(51) Int Cl.:
*H04B 7/185* (2006.01)     *H04H 20/18* (2008.01)
*H04H 20/67* (2008.01)

(21) Application number: **12156738.2**

(22) Date of filing: **23.02.2012**

(54) **Method and system for synchronizing time and frequency sources, particularly for video data transmissions**

Verfahren und System zur Synchronisierung von Zeit- und Frequenzquellen, insbesondere für Videodatenübertragungen

Procédé et système pour la synchronisation des sources temporelles et de fréquence, en particulier pour les transmissions de données vidéo

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2011 IT MI20110292**

(43) Date of publication of application:
**29.08.2012 Bulletin 2012/35**

(73) Proprietor: **Screen Service Broadcasting Technologies S.P.A.**
**25125 Brescia (IT)**

(72) Inventors:
• **Bargauan, Michele Mario**
**20026 NOVATE MILANESE MI (IT)**
• **Danieli, Andrea**
**35127 PADOVA (IT)**

(74) Representative: **Modiano, Micaela Nadia et al**
**Modiano & Partners (IT)**
**Via Meravigli, 16**
**20123 Milano (IT)**

(56) References cited:
**WO-A1-93/07682     US-A1- 2006 227 043**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a data communication method and system, more particularly to a method and a system for synchronizing digital transmissions among a plurality of devices by using satellite data communication.

Typically, in digital video transmissions at least one broadcaster (or master) transmits or broadcasts over the airwaves a signal that contains certain data, programs or services. Such signal is transmitted to a plurality of receiving devices (or disciplined generators) which are located on the territory to be covered. Such receiving devices (or disciplined generators) in turn retransmit the signal containing certain data, programs or services to a plurality of end users, located on the territory, who utilize the programs or services.

Typically, in a transmitter network, certain events or programs might need to be transmitted to end users at the same instant, i.e., simultaneously and with a speed that is proportional to a time that is equal for all. In other words, all the receiving devices might receive the signals sent by said at least one broadcaster at different times, i.e., with time delays, and in turn must broadcast the same content in output in a given time and frequency interval so as to retransmit it simultaneously to the end users who use said content. This entails the need to synchronize all the receiving devices with the transmitter, this being reported as a criticality for this type of network with a broadcaster, a plurality of disciplined receivers and end users. In practice it is necessary to have disciplined receivers which are mutually synchronous in their transmitter part, in addition to the fact that it is necessary to compensate for the propagation time of the signals on the basis of the calculated difference between the instant when a given signal is sent and the instant of arrival at the input of each receiving apparatus of the network, in particular with the receiving apparatus of the network that receives a given signal with the greatest delay.

Typically, synchronization by means of Time and Frequency signals, for example in the field of digital television broadcasts, has been regulated exclusively by means of the GPS (Global Positioning Service) system. Therefore, the method generally used to synchronize times and frequencies of electronic devices is the GPS satellite system.

The GPS system is composed of a set of satellites that orbit around the Earth and allow a particular type of receiver to generate a reference frequency and time independently of its position on the ground. This entails that a set of apparatuses, each provided with a GPS receiver, can use a same reference frequency and a same reference time.

However, the system of synchronization via GPS is not devoid of drawbacks. For example, in the presence of weather problems, such as for example magnetic storms, the system may fail and/or not operate correctly and the end users might no longer receive any signal. Moreover, the GPS system is entirely dependent on the Department of Defense of the United States of America.

Typically, what one wishes to transmit is broken down into digital data packets or data blocks. Service information known as header is associated with each data block (known as payload) and describes the type of datum or data associated with the payload. All this is typically sent by the transmitter (or master) to the receivers, which in turn retransmit what has been received, thus covering the entire desired territory and the end users that are present therein.

Typically, the header contains some of the information required for transmission, such as the life of the packet, the data that relate to assembly with the other packets, and so forth. Another item of information that is typically contained in the header is the PID, which indicates the type, among the several types of transmitted information, with which the data carried by the corresponding payload are associated. The several disciplined receivers that receive what has been transmitted to them verify the PID of each received packet and decide whether to keep it and use what is contained in the payload or reject it.

Problems of malfunction and lack of synchronization can arise if the GPS reference signals described above are not available.

WHO 93/07682 discloses a method for synchronizing at least one master loop wherein a simulcast system provides system clock synchronization and carrier frequency equalization.

US 2006/227043 discloses the estimate of the position of a satellite in space.

The aim of the present invention is to provide a method and a system for disciplining time and frequency sources, particularly for transmissions of video data, that solves the problems described above.

Within the scope of this aim, an object of the present invention is to provide a method for disciplining time and frequency sources by using an infrastructure that is universally available and tested in the telecommunications world.

Another object of the present invention is to provide a method for disciplining and synchronizing time and frequency sources that utilizes sources that are alternative to GPS and is capable of ensuring continuous operation regardless of any malfunction or voluntary or involuntary degradation of the GPS system.

Another object of the present invention is to provide a method for disciplining time and frequency sources that is highly reliable, relatively simple to provide and at low costs.

This aim, as well as these and other objects that will become better apparent hereinafter, are achieved by a method for synchronizing a master loop with one or more disciplined generators, as defined in claim 1.

A further object, as well as these and other objects that will become better apparent hereinafter, are achieved by a system for synchronizing a master loop with one or more disciplined generators, as defmed in claim 19.

Further characteristics and advantages of the invention will become better apparent from the description of a preferred but not exclusive embodiment of a method for disciplining time and frequency sources according to the present invention, illustrated by way of non limiting example in the accompanying drawings, wherein:

Figure 1 is a diagram of the system with the information streams;

Figure 2 is a block diagram of the operation of the overall system;

Figure 3 is a view of the structure of a packet, with the header and the payload;

Figure 4 is a view of the loops that correspond to the system of Figure 1. The numerals in circles refer to the corresponding reference numerals of Figures 1 and 2;

Figure 5 is a view of the system according to the present invention;

Figure 6 is a view of the system of Figure 5, modified to estimate the position of the satellite in space.

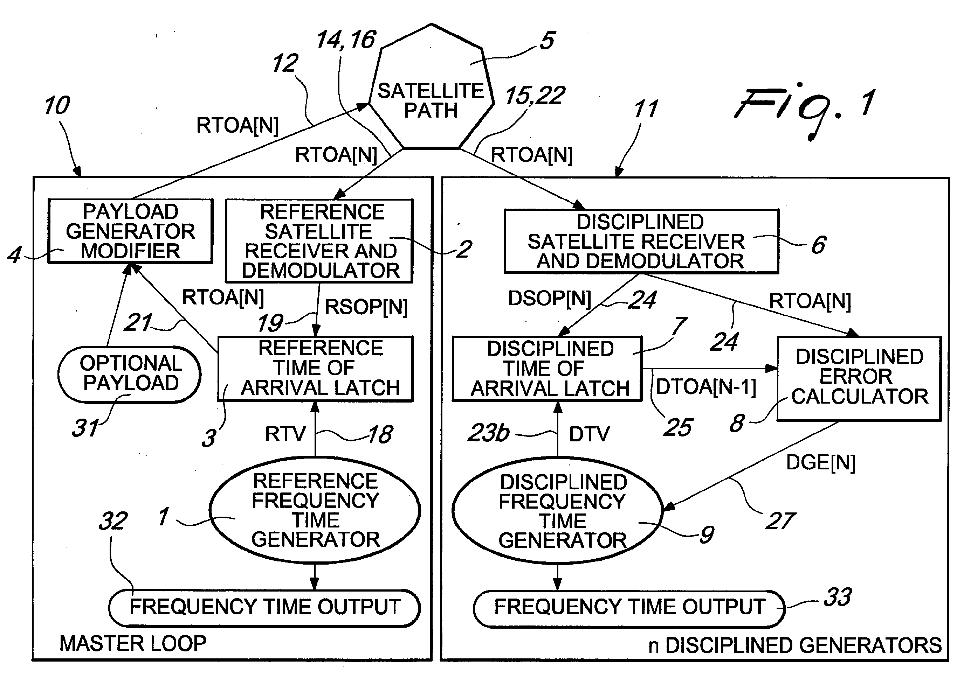

With reference to the figures, the system shown in Figure 1 is composed of a reference frequency and time generator module, designated by the reference numeral 1, which is capable of issuing constantly a time reference with a high degree of resolution (hereinafter termed RTV - Reference Time Value), preferably on the order of 10 ns. The reference frequency and time generator module 1 can be constituted by any time and frequency source that the user wishes to use in order to discipline n "remote" disciplined time and frequency generators 9 (or DTFG). The system also comprises a reference satellite receiver and demodulator module 2 (hereinafter referenced as RSRD), constituted by a realtime satellite receiver and demodulator.

The reference satellite receiver and demodulator 2 is capable of generating an RSOP (Reference Start Of Payload) time marker every time the input signal contains a sequence that is "known" beforehand. The RSRD module 2 is further capable of processing the signal in a deterministic manner and with a fixed delay between the input RF signal and the output of the time markers (RSOP).

If the signal in input is of the DVB-S type, the element RSRD 2 uses, in order to generate the RSOP time markers, preferably the instant of arrival of the packet that is tagged by a pair of values, Packet Identification ID (PID) and Continuity Counter (CC, a progressive counter that allows the receiver to understand whether some packets among the ones it is interested in using have been lost).

If instead the signal in input is of the DVB-S2 type, the RSRD element 2 uses, in order to generate the RSOP time markers, preferably the instant of arrival of the BB frame that has a given ISSY value or, as an alternative, the instant of arrival of the packet that is tagged by a pair of values, Packet Identification ID (PID) and Continuity Counter (CC, a progressive counter that allows the receiver to understand whether some packets among the ones it is interested in using have been lost).

According to the present invention, an additional service is added (the data of which are transmitted by means of packets identified by a suitable PID) which has in the payload the information required by the system to operate as one wishes.

Another element that constitutes the system is the reference time of arrival latch module 3 (hereinafter referenced as RTOA latch), which comprises a module for entering the instantaneous value RTV in a variable termed RTOA 30 upon the arrival of each time marker RSOP.

A further element that constitutes the system is a payload generator modifier module (PGM), designated by the reference numeral 4. Preferably, the PGM 4 comprises a unit for entering the RTOA variable 30 in the packet and comprises a unit capable of generating a signal that is adapted to be carried over the satellite path. The PGM 4 can generate the signal internally or can modify one that is already present in input. The sequence of the RTOA variables 30 is present in the output signal of the PGM 4, in the positions that can be recognized by the RSRD module 2.

Another element of the system is the Satellite Path (SP) module 5, to which any satellite path composed of the modulation, amplification, transplanting and reception apparatuses belongs.

Another element of the system is a disciplined satellite receiver and demodulator module (DSRD), designated by the reference numeral 6, which comprises a realtime satellite receiver and demodulator that is preferably identical to the RSRD module 2. The DSRD module 6 is capable of generating time markers (Disciplined Start of Payload, DSOP) whenever the sequence (PID + CC in the case of DVB-S or BB frame/ISSY in the case of DVB-S2) used by the RSRD module 2 occurs in the input signal. Moreover, it preferably processes the signal in a deterministic manner and with a fixed delay between the RF signal in input and the output of the time markers (RSOP) and delivers the sequence of RTOA 30 that is present in the signal at its input.

Another element of the system is a disciplined time latch module (DTOA latch), designated by the reference numeral 7, which is capable of entering the instantaneous disciplined time value (DTV) in a variable termed disciplined time of arrival (DTOA), at each start of a disciplined payload (DSOP, Disciplined Start of Payload).

The system can include a disciplined error calculation module, designated in the figures by the reference numeral 8, which is capable of processing the disciplined generator error (DGE) value given by the difference between DTOA and RTOA 30:

$$DGE = DTOA - RTOA$$

Another element of the system is a disciplined time and frequency generator (DTFG) module, designated by the reference numeral 9 in the figures, which is provided with an oscillator and consequently with a counter whose task is to bring the value of DGE to zero by means of successive iterations. The DTFG module 9 produces a disciplined time value (DTV) signal, preferably with a typical resolution of 10 ns.

The method according to the present invention is preferably composed of two main functions.

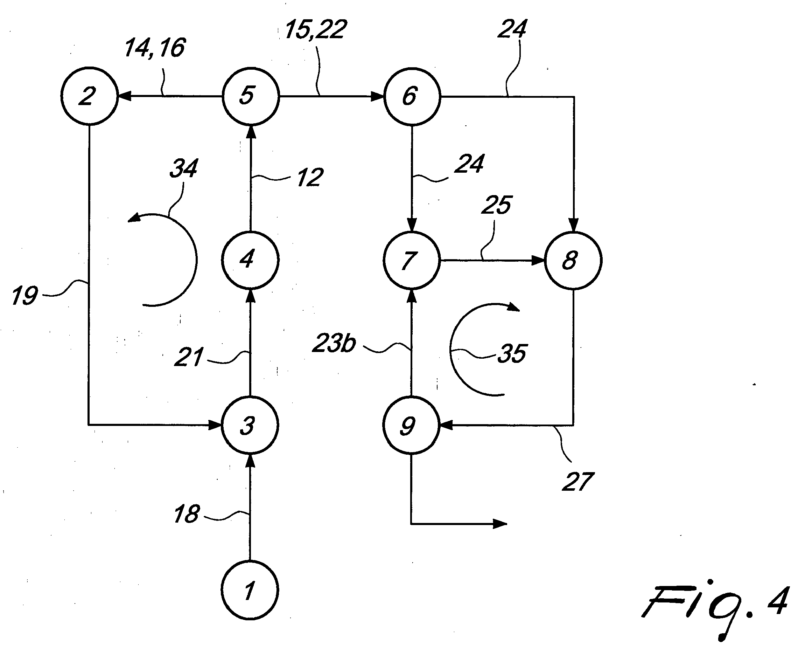

The first main function is constituted by a Master Loop 10, which is a feedback connection, shown more clearly in Figure 4, in which the several reference modules, i.e., RTFG 1, RSRD 2, RTOA latch 3, and the PGM module 4, are preferably connected to each other by means of the satellite path 5. This path is always active and is not altered by other elements of the system but provides information to the second main function, i.e., the n disciplined generators 11.

The Master Loop 10 is preferably formed by the loop 34 of Figure 4.

Each of the n disciplined generators 11 (or slaves) that are distributed on the territory comprises n remote systems, preferably located on the territory and placed at different distances from the Master Loop 10 and each composed of the following elements or modules:

- a disciplined satellite receiver and demodulator (DSRD) 6;
- a disciplined time of arrival (DTOA) latch module 7;
- a disciplined generator error calculator (DGE computer) 8;
- a disciplined time and frequency generator (DTFG) 9.

The second function of the n disciplined generators 11 is capable, by using the information contained in the satellite stream in input to the DSRD module 6 (in turn sent by the Master Loop 10), of recreating in the remote (disciplined) stations the original time and frequency references (for reference).

Initially, the reference time and frequency generator module 1 generates a time reference RTV and sends it to the reference time of arrival latch module 3, which in turn generates the variable RTOA[N] as a function of RTV. Then the reference time of arrival latch module 3 sends to the PGM module 4 the signal that contains the variable RTOA[N] and the PGM module 4 enters said variable 30 into the payload 29 of the packet.

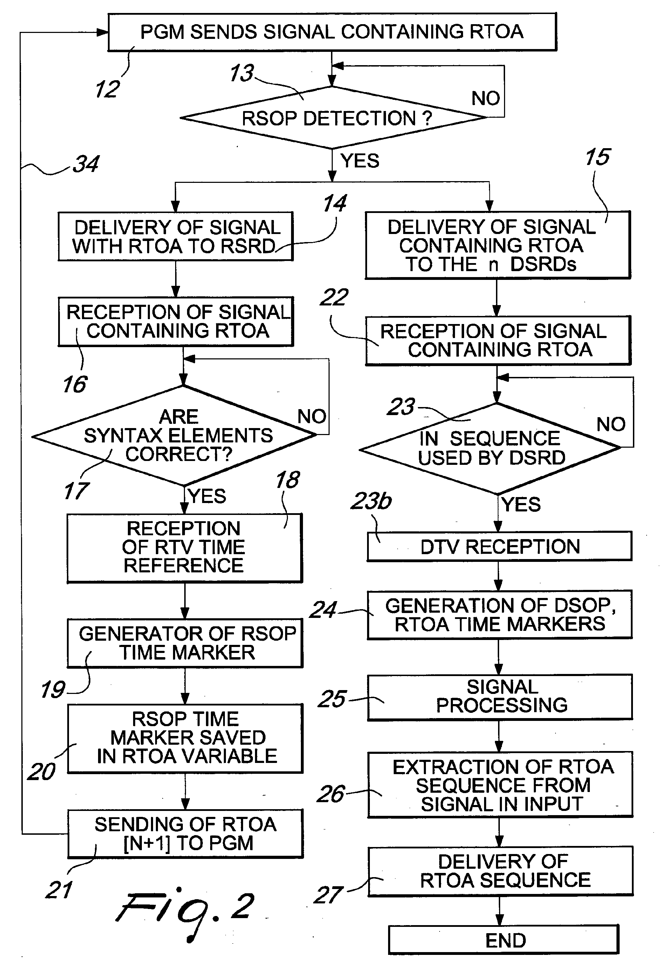

In the operation of the system, shown in Figure 2, the PGM module 4 sends, as shown in Figure 2, a stream 12 toward the satellite path 5 that contains the last value RTOA[N] of the variable RTOA, previously generated by the reference time of arrival latch module 3.

At the beginning of the process, and until the first RSOP is detected, it is not possible to determine RTOA and therefore the RTOA variable can assume any value (stream 13).

Then, for example at the iteration N, once the value RSOP[N] of the first RSOP has been detected, the satellite path 5 preferably carries the signal that contains for example the value RTOA[N] (streams 14, 15) both towards the RSRD module 2 and towards the n DSRD modules 6.

The RSRD module 2 monitors the content of the stream arriving from SP 5 (stream 16) and, when it detects the correct syntax elements (stream 17), it generates the time marker RSOP (stream 19).

The time marker RSOP[N] is used preferably to identify the instant in the iteration N in which the RTV value generated (stream 18) by the reference time and frequency generator module 1 is to be received. This instant is saved in the variable RTOA (stream 20), which is sent (stream 21) to the PGM module 4 and can be used during the subsequent iteration N+1 (stream 34) by means of the new value RTOA[N+1].

Preferably, after the satellite path 5 has carried the signal that contains the RTOA[N] value (streams 14, 15) both toward the RSRD module 2 and toward the n DSRD modules 6, the n DSRD modules 6 monitor the content of the stream arriving from the satellite path 5 (stream 22) and, when they detect the correct syntax elements (stream 23), they generate (stream 24) a new time marker DSOP[N] and a new RTOA[N] marker (which is the value that had been entered in the satellite signal by the PGM 4).

The DSOP[N] time marker is used to identify the instant when the time reference DTV generated by the disciplined time generator module 9 is received (stream 23b). This value, indicated as DTOA[N-1], is saved within the variable DTOA and is used by the disciplined time computer to calculate the disciplined generator error value DGE[N] (sequence of events stream 25).

The disciplined generator error value DGE[N] is calculated (stream 26) by subtracting from the value DTOA[N] of the instant N the value RTOA[N] of the instant N in the following manner:

$$DGE[N] = DTOA[N] - RTOA[N]$$

The disciplined generator error value DGE[N] thus calculated is then sent (stream 27) to the DTFG module 9 for its internal corrections. In this manner, a loop designated by the reference numeral 35 in Figure 4 is formed in each one of the n disciplined generators.

If the geographical position of the n DTFG modules 9, contained in each of the n disciplined generators 11, is such that their distance from the satellite is not equal to that of the Master Loop 10 and one wishes to obtain in the remote stations the same time value as the Master Loop 10, it is necessary to add to the value DGE a constant in order to synchronize all the clocks of the system. In this manner, the reference frequency time generator 1 of the master loop 10 is always synchronized with the n disciplined frequency time generators 9.

As shown in Figure 4, the feedback loop is identified by the loop 34 that passes in order through the modules RTOA latch 3, PGM 4, SP 5, RSRD 2, RTOA latch 3.

The disciplined generators 11 are connected unidirectionally to the master generator 1 of the master loop module 10 by means of the path identified in the following order: from the modules RTV 1, RTOA latch 3, PGM 4, SP 5, DSRD 6, DTV latch 7 and disciplined error calculator 8, DTFG 9.

The master system 10 receives the signal which it transmits to the satellite 5 and uses it to calibrate the information that it transmits. The transmissions preferably occur synchronously.

Preferably, all the n disciplined generators 11 are mutually independent. Each one of the n disciplined time and frequency generators 9 that are present in each disciplined module 11 follows the time indicated by the reference generator 1 by means of the feedback with the master loop 10. In practice, each one of the modules 9 adjusts the speed of local time so as to synchronize all the signals transmitted by the disciplined generators 11 with the reference signal of the master loop 10. In practice, each receiver 11 enters a given delay in order to take into account the propagation delays caused by the distance between each one of the n generators disciplined by the master loop 10. Preferably, if one wishes all the n disciplined generators to retransmit the signal simultaneously to the end users (or in turn to other disciplined generators, if present), the delay introduced in each disciplined module 11 is calculated on the basis of the worst module 11, for example the one that lies physically furthest from the master loop 10.

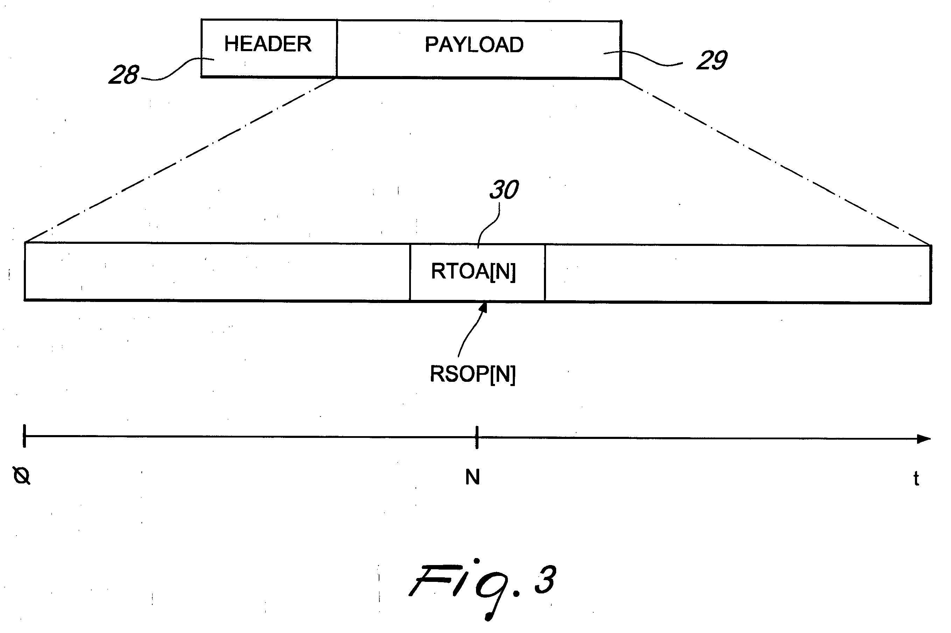

Figure 3 is a view of the typical structure of a packet, which is composed of a header 28 and a payload 29. In detail, the sequence of values of the variable RTOA 30 is reported and it is highlighted that at each iteration the corresponding values of the time markers RSOP, which identify the instants when the RTVs are received, are saved in these variables.

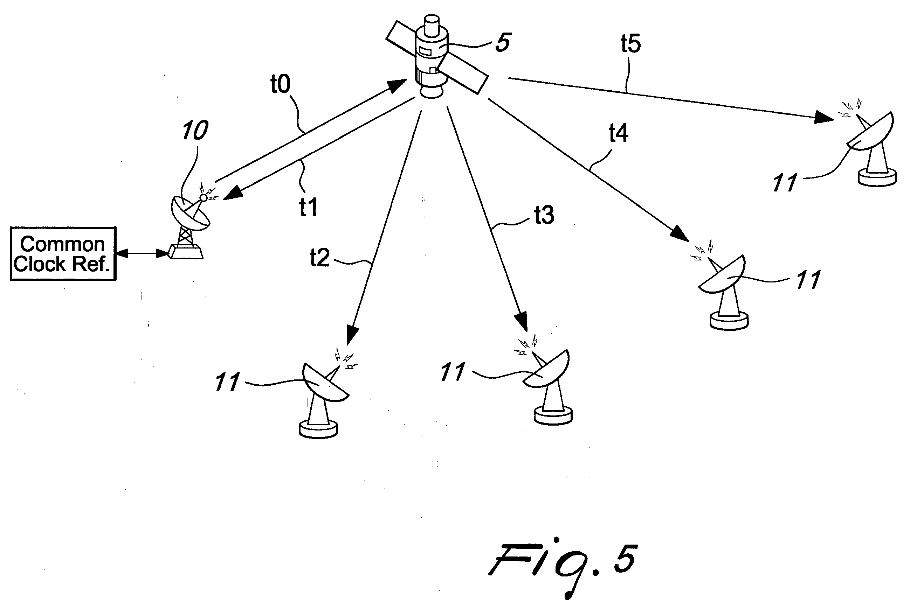

Figure 5 is a schematic view of the system described above, which is constituted by a Master Loop 10, which is optionally connected to a reference time and frequency generator 100, n disciplined generators and a geostationary satellite 5. The figure also indicates the travel times of the signals sent/received by the several devices. In particular, t0 is the travel time of the signal sent from the Master 10 to the satellite 5, t1 is the time taken by the signal sent from the satellite 5 to the Master 10, and t2, t3, ..., tn represent the travel times taken by the signal sent from the satellite 5 towards the n disciplined generators 11; for example, t2 is the time taken to reach the first disciplined generator 11 and t3 is the time taken by said signal to reach the second disciplined generator 11, and so forth.

Another cause of delays in the transmitted and received signal can be due to the fact that the satellite or satellite path 5, although geostationary, actually moves in the neighborhood of its nominal position. The region in which the satellite is positioned can be approximated to a cube that is centered on the nominal position of the satellite and has sides of several tens of kilometers. Because of this, the distances between the satellite 5 and the several disciplined generators 11 change, thus changing also the travel (and arrival) times of the synchronization signals. All this leads to a high uncertainty as to when the disciplined time and frequency generators 9 must generate the synchronization signals, and for many applications this is not acceptable.

For greater synchronization accuracy, the method and the system described above can preferably include an estimate of the position of the satellite 5 in space, so that each disciplined generator 11, once its position and the position of the satellite 5 are known, can calculate and thus compensate the difference in distance with respect to the master 10 of the synchronization signals that reach it.

In order to estimate the position of the satellite in space, in addition to using the n disciplined generators 2 described above, it is possible to use preferably m disciplined triangulation machines 110, all synchronous with the master machine 10, which record the arrival times ti of the synchronization signals and transmit said information to an adapted computing center 111, which by way of mathematical processes calculates the position of the satellite 5 and reports said information to the master 10, which transmits it to all the n disciplined generators 11.

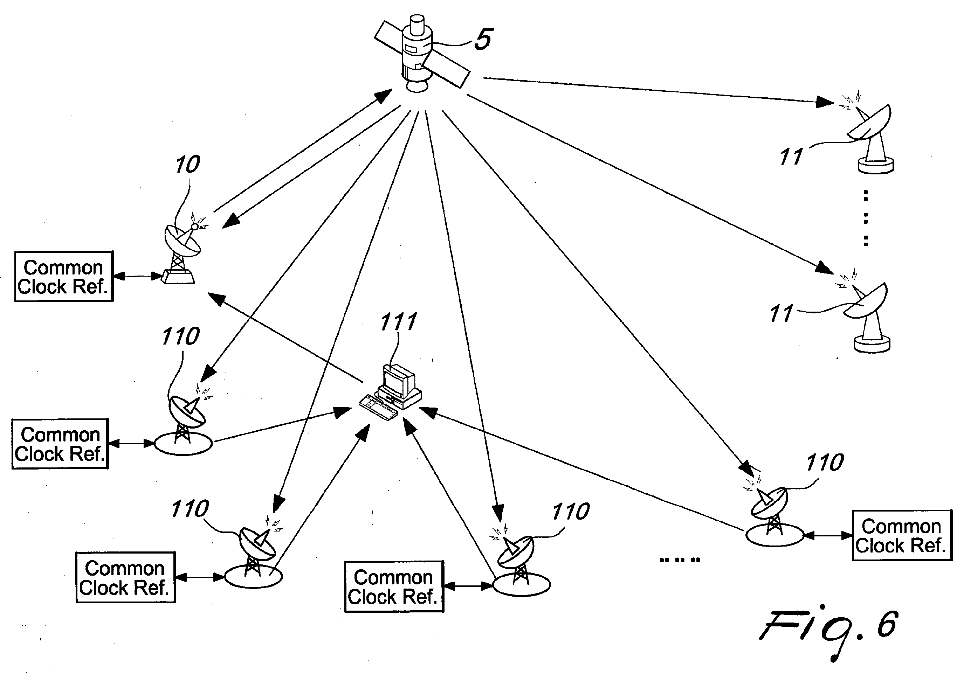

Such a modified system is shown in Figure 6, in which the m disciplined triangulation machines 110 have clocks which are synchronous with the clock of the master 10, the master 10 is the machine with the reference clocks for the entire system, which are used to generate a time and frequency reference, and the n disciplined generators, whose task is to generate time and frequency references which are synchronous with those generated by the master 10. The system is preferably constituted by a master 10, at least three disciplined triangulation machines 110 and an unlimited number n of disciplined generators.

In the system of Figure 6, instead of adding a dedicated packet, a packet which is already present in the stream, the MIP (Megaframe Initialization Packet) packet, is used; such packet contains available space, which can be modified to add additional data. As an alternative or as an addition to the MIP packet, it is possible to add a packet from scratch as described previously.

In practice, if reference is made to the PID+CC pair described earlier, the packet named by the DVB consortium as MIP (Megaframe Initialization Packet) has an Identification number equal to "21".

In the system of Figure 6, the Master 10 receives a data stream that contains the MIP packets generated by the Payload Generator/Modifier element 4, which in the specific case can create a packet with a selected PID or modify the payload of packets that exist already, albeit for other purposes, such as for example packets with PID #21, also known as MIP (Megaframe Initialization Packet).

The Master 10 numbers the successive MIP packets (or packets with selected PID) and enters a packet identifier "K" (optionally, together with other information described later) in the MIP packet (or packet with selected PID), modifying it. At this point each MIP packet (or packet with selected PID) can be distinguished from the others by checking its packet identifier (K, K+1, K+2, ...).

The data stream with the modified MIP packet (or packet with chosen PID) continues its path and is transmitted to the satellite 5, which in turn broadcasts this stream to its entire coverage area.

The data stream is thus received on the ground by all the devices of the system (of the Master type 10, disciplined triangulation machines 110 and disciplined generators 11).

The Master 10 records the instant (calculated on the basis of its own internal clock) of return of the MIP packet (or packet with selected PID) number K ($PID_k$) and transmits this information in the next MIP (or other selected PID) number K+1 ($PID_{k+1}$).

Each one of the m disciplined triangulation machines 110 records the instant of arrival of the MIP packet (or with other selected PID) identified by the number K ($MIP_k$, calculated on the basis of its own internal clock) and saves it internally to use it upon the arrival of the next MIP packet (or packet with other selected PID), i.e., number K+1. This occurs because the information on the arrival time at the Master of the MIP packet (or packet with other selected PID) number K ($MIP_k$) is contained in the MIP packet (or packet with other selected PID) number K+1 ($MIP_{K+1}$).

If the paths that the MIP packet (or packet with other selected PID) number k ($MIP_k$) has followed to reach the several disciplined triangulation machines 110 are longer or shorter than the path that the $MIP_k$ packet (or packet with other selected PID) followed to return to the Master 10, the $MIP_k$ packet (or packet with other selected PID) arrives at the several disciplined triangulation machines 110 at different instants. These instants are calculated on the basis of the clocks contained in the disciplined triangulation machines 110, which are synchronous with the clock of the Master 10.

The disciplined triangulation machines 110 calculate the difference between the time of arrival at the Master 10 and their arrival time.

The computing center 111 queries the several disciplined triangulation machines 110, reading their corresponding advances or delays with respect to when the MIP packets (or packets with other selected PID) have arrived at the Master 10.

With a triangulation algorithm, from the advanced/delays, the computing center 111 estimates the position of the satellite 5 and transmits it to the Master 10, which enters it in the MIP packets (or packets with other selected PID) together with the packet identifier. This allows each disciplined generator 11 to know the position of the satellite 5, and once its own position and the position of the Master 10 are known, to calculate, and thus compensate, the path differences of the MIP packets (or packets with other selected PID) with respect to the master 10. In this manner, each disciplined generator 11 is able to keep its internal clock in step with the clock of the Master 10.

In practice, as described earlier, the entries occur by means of the payload generator modifier 4 of Figure 1, as illustrated previously in Figures 1-4.

In practice it has been found that the system and method for disciplining time and frequency sources according to the present invention fully achieve the intended aim and objects, allowing to provide a system for disciplining time and frequency sources by using existing infrastructure.

The system and method for disciplining time and frequency sources thus conceived are susceptible of numerous modifications and variations, all of which are within the scope of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

**Claims**

1. A method for synchronizing at least one master loop (10) with one or more disciplined generators (11), comprising the steps of:

   (a) sending (12) a reference time signal (30) from a master loop (10) to a satellite path (5);
   (b) receiving (14, 16), on the part of said master loop (10), said reference time signal (30) retransmitted by said satellite path (5) in order to use said signal (30);
   (c) receiving (15, 22), on the part of each one of said one or more disciplined generators (11), said reference time signal (30) retransmitted by the satellite path (5);

(d) modifying the local time speed so as to synchronize the transmission of all the signals transmitted by the disciplined generators (11) to other users with the reference time signal (30) transmitted by the master loop (10) in step (a);

the accuracy of the synchronization being improved by the following steps; m disciplined triangulation machines (110), whose clocks are synchronous with the clock of the master loop (10) record the arrival times (ti) of synchronization signals transmitted from a master machine (10) via a satellite (5), and transmit them to a computing center (111);

the disciplined triangulation machines (110) calculate the difference between the time of arrival at the master machine (10) and the arrival time at the respective triangulation machine (110), said difference being transmitted to said computing center (11);

said computing center (111) determines the position of the satellite (5) and reports said information to the master machine (10), which in turn transmits it to all the n disciplined generators (11);

each disciplined generator (11), on the basis of the position of the satellite (5), its own position and the position of said master machine (10), calculates and thus compensates the path differences with respect to all the n disciplined generators (11).

2. The method according to claim 1, **characterized in that** said signal uses packet data of the DVB-S or DVB-S2 type, which comprise a header with a new service and a payload, containing the values (RTOA) of said reference time signal, (30).

3. The method according to claim 1 or 2, **characterized in that** said reference time signal (30) comprises a reference time of arrival marker (RTOA[N]).

4. The method according to claim 3, **characterized in that** said reference time of arrival marker (RTOA[N]) is sent by a payload generator modifier module (4).

5. The method according to one or more of claims 3 or 4, **characterized in that** a reference satellite receiver and demodulator module (2) of said master loop (10) receives (14) from the satellite path (5) said reference time of arrival marker (RTOA[N]) sent by the payload generator modifier module (4).

6. The method according to claim 5, **characterized in that** it comprises the step of generating a reference start of payload time marker (RSOP[N]) on the part of said reference satellite receiver and demodulator module (2) and sending (19) said reference start of payload time marker (RSOP[N]) to a reference time of arrival latch module (3).

7. The method according to claim 6, **characterized in that** it comprises the step of issuing a reference time value (RTV) on the part of a reference frequency and time generator module (1) and sending it (18) to said reference time of arrival latch module (3).

8. The method according to one or more of claims 6 or 7, **characterized in that** it comprises the step of entering in a reference time of arrival variable (RTOA [N+1]) the instantaneous value of the reference time value (RTV) at each reference start of payload time marker (RSOP[N]) on the part of said reference time of arrival latch module (3) and sending said value (RTOA[N+1]) to a payload generator modifier module (4), which subsequently sends again (12) the new signal (RTOA[N+1]) to the satellite (5).

9. The method according to one or more of the preceding claims, **characterized in that** said step (15, 22) of receiving said reference time signal (30) on the part of each one of said one or more disciplined generators (11) consists in:

e) receiving (22), on the part of a disciplined satellite receiver and demodulator module (6), said output signal generated by the payload generator modifier module (4);

f) generating (24) a disciplined start of payload time marker (DSOP[N] on the part of said disciplined satellite receiver and demodulator module (6) and sending said disciplined start of payload time marker (DSOP[N]) to a disciplined time of arrival latch module (7);

g) issuing a disciplined time value (DTV) on the part of a disciplined time and frequency generator module (9);

h) entering in a disciplined time of arrival variable (DTOA[N]) the instantaneous value of the disciplined time value (DTV) at each start of the disciplined payload (DSOP[N]) on the part of said disciplined time of arrival latch module (7) and sending said disciplined time of arrival variable (DTOA[N]) to a disciplined generator error calculator module (8);

i) receiving, on the part of the disciplined generator error calculation module (8), said disciplined time of arrival variable (DTOA[N]) that arrives from the disciplined time of arrival latch module (7) and receiving (27) the output signal sent by the payload generator modifier module (4) which arrives from the disciplined satellite receiver and demodulator module (6);

j) processing a value DGE which is determined by the difference between the disciplined time of arrival (DTOA) and the reference time of arrival, and sending it to the disciplined time and frequency generator module (9).

10. The method according to one or more of claims 4 to 9, **characterized in that** said payload generator modifier module (4) can generate the signal in output internally or can modify a signal that is already present in input

11. The method according to one or more of claims 5 to 10, **characterized in** said reference time of arrival marker (RTOA[N]) is generated by a reference time of arrival latch module (3).

12. The method according to one or more of claims 5 to 11, **characterized in that** said reference time of arrival sequence is present in the signal in output from the payload generator modifier module (4) in the positions that are recognizable by said reference satellite receiver and demodulator module (2).

13. The method according to claim 2, **characterized in that** said stream b) is generated every time that in the signal in input that arrives from the payload generator modifier (4) there is, in the positions that are known beforehand, the reference time of arrival sequence.

14. The method according to claim 2, **characterized in that** said reference time and frequency generator module (1) is capable of issuing constantly said reference time value (RTV) with a high degree of resolution.

15. The method according to claim 2, **characterized in that** said reference satellite receiver and demodulator module (2) produces said reference start of payload time marker (RSOP[N]) every time that, in the signal in input, there is a sequence known beforehand which contains the reference time value (RTV).

16. The method according to one or more of claims 2 to 9, **characterized in that** said reference satellite receiver and demodulator module (2) processes the signal in input in a deterministic manner and with a fixed delay between the RF signal in input and the output of the reference start of payload time markers (RSOP[N]).

17. The method according to one or more of claims 2 to 10, **characterized in that** said reference satellite receiver and demodulator module (2) uses, in order to generate the reference start of payload time markers (RSOP):

the instant of arrival of the packet identified by a pair of values Packet ID (PID) and Continuity Counter (CC), if the signal in input is of the DVB-S type; or
the instant of arrival of the BB frame that has a specific ISSY value, if the signal in input is of the DVB-S2 type.

18. The method according to one or more of the preceding claims, **characterized in that** it further comprises a step of estimating the position of the satellite (5) in space.

19. A system for synchronizing at least one master loop (10) with one or more disciplined generators (11), comprising :

m disciplined triangulation machines (110), whose clocks are synchronous with the clock of the master loop (10) and which are adapted to record the arrival times (ti) of synchronization signals transmitted from a master machine (10) via a satellite (5), and to transmit them to a computing center (111);
the disciplined triangulation machines (110) being adapted to calculate the difference between the time of arrival at the master machine (10) and the arrival time at the respective triangulation machine (110), said difference being transmitted to said computing center (11);
said master loop (10) being adapted to send a reference signal (30) to the satellite Path (5);
said master loop (10) being adapted to receive (14, 16) said reference signal retransmitted by the satellite (5);
said computing center (111) being adapted to determine the position of the satellite (5) and report said information to the master machine (10), which in turn transmits it to all the n disciplined generators (11);
each one of said one or more disciplined generators (11) receiving (15, 22) said reference signal (30) retransmitted by the satellite (5) and modifying the local speed of time so as to synchronize the transmission of all the signals transmitted by the disciplined generators (11) to other users with the reference signal (30) of the master loop (10);
each disciplined generator (11), on the basis of the position of the satellite (5), its own position and the position of said master machine (10), being adapted to calculate and thus compensate the path differences with respect to all the n disciplined generators (11).

**Patentansprüche**

1. Ein Verfahren zur Synchronisierung mindestens eines Hauptregelkreises (10) mit einem oder mehreren geregelten Generatoren (11) die folgenden Schritte umfassend:

(a) Das Senden (12) eines Bezugszeitsignals (30) von einem Hauptregelkreis (10) zu einer Satellitenbahn (5);
(b) Das Empfangen (14, 16), durch den Hauptregelkreis (10), des Bezugszeitsignals (30), das von der Satellitenbahn (5) wiederum übertragen wird, um das Signal (30) zu benutzen;
(c) Das Empfangen (15, 22), durch jeden einzelnen unter dem einen oder mehreren geregelten Generatoren (11), des Bezugszeitsignals (30), das von der Satellitenbahn (5) wiederum übertragen wird;
(d) Das Ändern der lokalen Zeitgeschwindigkeit, um die Übertragung aller Signale zu synchronisieren, die von den geregelten Generatoren (11) an andere Benutzer übertragen werden, wobei das Bezugszeitsignal (30) durch den Hauptregelkreis (10) aus Schritt (a) übertragen wird; wobei die Genauigkeit der Synchronisierung durch folgende Schritte erhöht wird:

m-geregelte Triangulationsvorrichtungen (110), deren Takte synchron mit dem Takt des Hauptregelkreises (10) sind, erfassen die Ankunftszeiten (ti) der Synchronisierungssignale, die von einer Hauptvorrichtung (10) über einen Satelliten (5) übertragen werden, und übertragen sie an ein Rechenzentrum (111);
Die geregelten Triangulationsvorrichtungen (110) berechnen die Differenz zwischen der Ankunftszeit an der Hauptvorrichtung (10) und der Ankunftszeit an der jeweiligen Triangulationsvorrichtung (110), wobei die Differenz an das Rechenzentrum (111) übertragen wird;
Das Rechenzentrum (111) bestimmt die Position des Satelliten (5) und leitet die Informationen an die Hauptvorrichtung (10) weiter, die sie wiederum an alle n-geregelte Generatoren (11) überträgt;
Auf der Grundlage der Position des Satelliten (5), der eigenen Position und der Position der Hauptvorrichtung (10) berechnet und gleicht folglich jeder geregelte Generator (11) die Bahndifferenz in Bezug auf alle n-geregelte Generatoren (11) aus.

2.  Das Verfahren gemäß Anspruch 1, **dadurch gekennzeichnet, dass** das Signal Paketdaten des Typs DVB-S oder DVB-S2 benutzt, die einen Kopf mit einem neuen Dienst und Nutzdaten umfassen, die Werte (RTOA) des Bezugszeitsignals (30) enthalten.

3.  Das Verfahren gemäß Anspruch 1 oder 2, **dadurch**

**gekennzeichnet, dass** das Bezugszeitsignal (30) eine Bezugzeit des Ankunftsmarkers (RTOA[N]) umfasst.

4.  Das Verfahren gemäß Anspruch 3, **dadurch gekennzeichnet, dass** die Bezugzeit des Ankunftsmarkers (RTOA[N]) von einem Nutzdaten-Generator-Änderungsmodul (4) übermittelt wird.

5.  Das Verfahren gemäß einem oder mehreren der Ansprüche 3 oder 4, **dadurch gekennzeichnet, dass** ein Referenz-Satellitenempfänger- und Demodulator-Modul (2) des Hauptregelkreises (10) von der Satellitenbahn (5) die Bezugzeit des Ankunftsmarkers (RTOA[N]), die vom Nutzdaten-Generator-Änderungsmodul (4) übermittelt wird, empfängt (14).

6.  Das Verfahren gemäß Anspruch 5, **dadurch gekennzeichnet, dass** es den Schritt umfasst, der im Erzeugen eines Bezugsstarts des Nutzdaten-Zeitmarkers (RSOP[N]) durch das Referenz-Satellitenempfänger- und Demodulator-Modul (2) besteht und im Senden (19) des Bezugsstarts des Nutzdaten-Zeitmarkers (RSOP[N]) an eine Bezugszeit des Ankunfts-Latch-Moduls (3).

7.  Das Verfahren gemäß Anspruch 6, **dadurch gekennzeichnet, dass** es den Schritt umfasst, der in der Ausgabe eines Bezugszeitwertes (RTV) durch ein Bezugsfrequenz- und Zeitgeneratormodul (1) besteht und im Senden desselben (18) an die Bezugszeit des Ankunfts-Latch-Moduls (3).

8.  Das Verfahren gemäß einem oder mehreren der Ansprüche 6 oder 7, **dadurch gekennzeichnet, dass** es den Schritt umfasst, der in der Aufnahme, in eine Bezugszeit der Ankunftsvariable (RTOA[N+1]), des Istwertes des Bezugszeitwertes (RTV) bei jedem Bezugsstart des Nutzdaten-Zeitmarkers (RSOP[N]) durch die Bezugszeit des Ankunfts-Latch-Moduls (3) besteht und im Senden des Wertes (RTOA[N+1]) an ein Nutzdaten-Generator-Änderungsmodul (4), das daraufhin das neue Signal (RTOA[N+1]) erneut an den Satelliten (5) sendet (12).

9.  Das Verfahren gemäß einem oder mehreren der vorstehenden Ansprüche, **dadurch gekennzeichnet, dass** der Schritt (15, 22) des Empfangens des Bezugszeitsignals (30) durch jeden einzelnen unter dem einen oder mehreren geregelten Generatoren (11) darin besteht:

e) im Empfangen (22), durch ein geregeltes Satellitenempfänger- und Demodulator-Modul (6), des vom Nutzdaten-Generator-Änderungsmodul (4) erzeugten Ausgangssignals;
f) im Erzeugen (24) eines geregelten Starts des Nutzdaten-Zeitmarkers (DSOP[N]) durch das geregelte Satellitenempfänger- und Demodulator-Modul (6) und im Senden des geregelten Starts des Nutzdaten-Zeitmarkers (DSOP[N]) an eine geregelte Zeit des Ankunfts-Latch-Moduls (7);

g) in der Ausgabe eines geregelten Zeitwertes (DTV) durch ein geregeltes Zeit- und Frequenzgeneratormodul (9);

h) in der Aufnahme in eine geregelte Zeit der Ankunftsvariable (DTOA[N]) des Istwertes des geregelten Zeitwertes (DTV) bei jedem Start der geregelten Nutzdaten (DSOP[N]) durch die geregelte Zeit des Ankunfts-Latch-Moduls (7) und im Senden der geregelten Zeit der Ankunftsvariablen (DTOA[N]) an ein geregeltes Generator-Fehler-Rechnermodul (8);

i) im Empfangen, durch das geregelte Generator-Fehler-Rechnermodul (8), der geregelten Zeit der Ankunftsvariablen (DTOA[N]), die von der geregelten Zeit des Ankunfts-Latch-Moduls (7) herrührt, und im Empfangen (27) des vom Nutzdaten-Generator-Änderungsmodul (4) gesandten Ausgangssignals, das vom geregelten Satellitenempfänger- und Demodulator-Modul (6) herrührt;

j) im Verarbeiten eines DGE-Wertes, der von der Differenz zwischen der geregelten Zeit der Ankunft (DTOA) und der Bezugszeit der Ankunft bestimmt wird, und im Senden desselben an das geregelte Zeit- und Frequenzgeneratormodul (9).

10. Das Verfahren gemäß einem oder mehreren der Ansprüche von 4 bis 9, **dadurch gekennzeichnet, dass** das Nutzdaten-Generator-Änderungsmodul (4) das Ausgangssignal intern erzeugen oder ein Signal, das bereits im Eingang vorhanden ist, ändern kann.

11. Das Verfahren gemäß einem oder mehreren der Ansprüche von 5 bis 10, **dadurch gekennzeichnet, dass** die Bezugzeit des Ankunftsmarkers (RTOA [N]) durch eine Bezugzeit des Ankunfts-Latch-Moduls (3) erzeugt wird.

12. Das Verfahren gemäß einem oder mehreren der Ansprüche von 5 bis 11, **dadurch gekennzeichnet, dass** die Bezugzeit der Ankunftssequenz im Ausgangssignal des Nutzdaten-Generator-Änderungsmoduls (4) in den Positionen, die vom Referenz-Satellitenempfänger- und Demodulator-Modul (2) erkannt werden, vorhanden ist.

13. Das Verfahren gemäß Anspruch 2, **dadurch gekennzeichnet, dass** der Strom b) jedes Mal erzeugt wird, wenn im Eingangssignal, das vom Nutzdaten-Generator-Änderungsmodul (4) herrührt, in den Positionen, die vorher bekannt sind, die Bezugzeit der

Ankunftssequenz vorhanden ist.

14. Das Verfahren gemäß Anspruch 2, **dadurch gekennzeichnet, dass** das Bezugszeit- und Frequenzgeneratormodul (1) in der Lage ist, den Bezugszeitwert (RTV) mit einem hohen Auflösungsgrad ständig auszugeben.

15. Das Verfahren gemäß Anspruch 2, **dadurch gekennzeichnet, dass** das Referenz-Satellitenempfänger- und Demodulator-Modul (2) den Bezugsstart des Nutzdaten-Zeitmarkers (RSOP[N]) immer dann erzeugt, wenn im Eingangssignal eine vorher bekannte Sequenz vorhanden ist, die den Bezugszeitwert (RTV) enthält.

16. Das Verfahren gemäß einem oder mehreren der Ansprüche von 2 bis 9, **dadurch gekennzeichnet, dass** das Referenz-Satellitenempfänger- und Demodulator-Modul (2) das Eingangssignal auf eine bestimmte Art und Weise und mit einer festgelegten Verzögerung zwischen dem RF-Eingangssignal und der Ausgabe des Bezugsstarts der Nutzdaten-Zeitmarker (RSOP[N]) verarbeitet.

17. Das Verfahren gemäß einem oder mehreren der Ansprüche von 2 bis 10, **dadurch gekennzeichnet, dass** das Referenz-Satellitenempfänger- und Demodulator-Modul (2) Folgendes benutzt, um den Bezugsstart der Nutzdaten-Zeitmarker (RSOP) zu erzeugen:

den Ankunftszeitpunkt des Datenpakets erkannt von einem Wertepaar Packet ID (PID) und Kontinuitätszähler (Continuity Counter, CC), wenn das Eingangssignal des Typs DVB-S ist; oder
den Ankunftszeitpunkt des BB-Frames, der einen spezifischen ISSY-Wert aufweist, wenn das Eingangssignal des Typs DVB-S2 ist.

18. Das Verfahren gemäß einem oder mehreren der vorstehenden Ansprüche, **dadurch gekennzeichnet, dass** es ferner einen Schritt umfasst, der in der Bestimmung der Position des Satelliten (5) im Weltall besteht.

19. Ein System zur Synchronisierung mindestens eines Hauptregelkreises (10) mit einem oder mehreren geregelten Generatoren (11) Folgendes umfassend:

m-geregelte Triangulationsvorrichtungen (110), deren Takte synchron mit dem Takt des Hauptregelkreises (10) sind und die dazu geeignet sind, die Ankunftszeiten (ti) der Synchronisierungssignale, die von einer Hauptvorrichtung (10) über einen Satelliten (5) übertragen werden, zu erfassen und sie an ein Rechenzentrum (111) zu übertragen;

wobei die geregelten Triangulationsvorrichtungen (110) dazu geeignet sind, die Differenz zwischen der Ankunftszeit an der Hauptvorrichtung (10) und der Ankunftszeit an der jeweiligen Triangulationsvorrichtung (110) zu berechnen, wobei die Differenz an das Rechenzentrum (111) übertragen wird;

wobei der Hauptregelkreis (10) dazu geeignet ist, ein Bezugssignal (30) an die Satellitenbahn (5) zu senden;

wobei der Hauptregelkreis (10) dazu geeignet ist, das Bezugssignal, das vom Satelliten (5) wiederum übertragen wird, zu empfangen (14, 16);

wobei das Rechenzentrum (111) dazu geeignet ist, die Position des Satelliten (5) zu bestimmen und die Informationen an die Hauptvorrichtung (10) weiterzuleiten, die sie wiederum an alle n-geregelte Generatoren (11) überträgt;

wobei jeder einzelne unter dem einen oder mehreren geregelten Generatoren (11) das Bezugssignal (30), das vom Satelliten (5) wiederum übertragen wird, empfängt (15, 22) und die lokale Zeitgeschwindigkeit ändert, um die Übertragung aller Signale zu synchronisieren, die von den geregelten Generatoren (11) an andere Benutzer mit dem Bezugssignal (30) des Hauptregelkreises (10) übertragen werden;

wobei auf der Grundlage der Position des Satelliten (5), der eigenen Position und der Position der Hauptvorrichtung (10) jeder geregelte Generator (11) dazu geeignet ist, die Bahndifferenz in Bezug auf alle n-geregelte Generatoren (11) zu berechnen und folglich auszugleichen.

## Revendications

1. Procédé pour synchroniser au moins une boucle principale (10) avec un ou plusieurs générateurs disciplinés (11), comportant les étapes consistant à :

   (a) envoyer (12) un signal d'heure de référence (30) depuis une boucle principale (10) à un trajet de satellite (5),
   (b) recevoir (14, 16), de la part de ladite boucle principale (10), ledit signal d'heure de référence (30) retransmis par ledit trajet de satellite (5) afin d'utiliser ledit signal (30),
   (c) recevoir (15, 22), de la part de chacun dudit un ou plusieurs générateurs disciplinés (11), ledit signal d'heure de référence (30) retransmis par le trajet de satellite (5),
   (d) modifier la vitesse d'heure locale de manière à synchroniser la transmission de tous les signaux transmis par les générateurs disciplinés (11) aux autres utilisateurs avec le signal d'heure de référence (30) transmis par la boucle principale (10) à l'étape (a),

la précision de la synchronisation étant améliorée par les étapes suivantes,

m machines de triangulation disciplinées (110), dont les horloges sont synchrones avec l'horloge de la boucle principale (10) enregistrent les heures d'arrivée (ti) des signaux de synchronisation transmis par une machine principale (10) via un satellite (5), et transmettent celles-ci à un centre informatique (111),

les machines de triangulation disciplinées (110) calculent la différence entre l'heure d'arrivée dans la machine principale (10) et l'heure d'arrivée dans la machine de triangulation respective (110), ladite différence étant transmise audit centre informatique (111),

ledit centre informatique (111) détermine la position du satellite (5) et rapporte lesdites informations à la machine principale (10), laquelle les transmet à son tour à tous les n générateurs disciplinés (11),

chaque générateur discipliné (11), sur la base de la position du satellite (5), de sa propre position et de la position de ladite machine principale (10), calcule et compense ainsi les différences de trajet par rapport à la totalité des n générateurs disciplinés (11).

2. Procédé selon la revendication 1, **caractérisé en ce que** ledit signal utilise des données de paquet du type DVB-S ou DVB-S2, qui comportent un en-tête avec un nouveau service et une charge utile, contenant les valeurs (RTOA) dudit signal d'heure de référence (30) .

3. Procédé selon la revendication 1 ou 2, **caractérisé en ce que** ledit signal d'heure de référence (30) comporte une heure de référence de marqueur d'arrivée (RTOA[N]).

4. Procédé selon la revendication 3, **caractérisé en ce que** ladite heure de référence de marqueur d'arrivée (RTOA[N]) est envoyée par un module de modification de générateur de charge utile (4).

5. Procédé selon l'une ou plusieurs des revendications 3 ou 4, **caractérisé en ce que** un module de démodulateur et de récepteur de satellite de référence (2) de ladite boucle principale (10) reçoit (14) en provenance du trajet de satellite (5) ladite heure de référence de marqueur d'arrivée (RTOA[N]) envoyée par le module de modification de générateur de charge utile (4).

6. Procédé selon la revendication 5, **caractérisé en ce que** il comporte l'étape consistant à générer un début de référence de marqueur temporel de charge utile (RSOP[N]) de la part dudit module de démodulateur et de récepteur de satellite de référence (2) et à envoyer (19) ledit début de référence de marqueur temporel de charge utile (RSOP[N]) à un module de verrouillage d'heure d'arrivée de référence (3).

7. Procédé selon la revendication 6, **caractérisé en ce qu'**il comporte l'étape consistant à émettre une valeur d'heure de référence (RTV) de la part d'un module de générateur d'heure et de fréquence de référence (1) et à l'envoyer (18) audit module de verrouillage d'heure d'arrivée de référence (3).

8. Procédé selon l'une ou plusieurs des revendications 6 ou 7, **caractérisé en ce que** il comporte l'étape consistant à entrer dans une heure de référence de variable d'arrivée (RTOA[N+1]) la valeur instantanée de la valeur d'heure de référence (RTV) au niveau de chaque début de référence de marqueur temporel de charge utile (RSOP[N]) de la part dudit module de verrouillage d'heure d'arrivée de référence (3) et à envoyer ladite valeur (RTOA[N+1]) à un module de modification de générateur de charge utile (4), lequel envoie à nouveau par la suite (12) le nouveau signal (RTOA[N+1]) au satellite (5).

9. Procédé selon l'une ou plusieurs des revendications principales, **caractérisé en ce que** ladite étape (15, 22) de réception dudit signal d'heure de référence (30) de la part de chacun desdits un ou plusieurs générateurs disciplinés (11) consiste à :

   e) recevoir (22), de la part d'un module de démodulateur et de récepteur de satellite discipliné (6), ledit signal de sortie généré par le module de modification de générateur de charge utile (4),
   f) générer (24) un début discipliné du marqueur temporel de charge utile (DSOP[N]) de la part dudit module de démodulateur et de récepteur de satellite discipliné (6) et envoyer ledit début discipliné du marqueur temporel de charge utile (DSOP[N]) à un module de verrouillage d'heure d'arrivée disciplinée (7),
   g) émettre une valeur d'heure disciplinée (DTV) de la part d'un module de générateur de fréquence et d'heure disciplinées (9),
   h) entrer dans une variable d'heure d'arrivée disciplinée (DTOA[N]) la valeur instantanée de la valeur d'heure disciplinée (DTV) à chaque début de la charge utile disciplinée (DSOP[N]) de la part dudit module de verrouillage d'heure d'arrivée disciplinée (7), et envoyer ladite variable d'heure d'arrivée disciplinée (DTOA[N] à un module de calcul d'erreur de générateur discipliné (8),
   i) recevoir, de la part du module de calcul d'erreur de générateur discipliné (8), ladite variable d'heure d'arrivée disciplinée (DTOA[N]) qui arrive en provenance du module de verrouillage d'heure d'arrivée disciplinée (7) et recevoir (27) le signal de sortie envoyé par le module de modification de générateur de charge utile (4) qui arrive en provenance du module de démodulateur et de récepteur de satellite discipliné (6),
   j) traiter une valeur DGE qui est déterminée par la différence entre l'heure d'arrivée disciplinée (DTOA) et l'heure d'arrivée de référence, et envoyer celle-ci au module de générateur de fréquence et d'heure disciplinées (9).

10. Procédé selon l'une ou plusieurs des revendications 4 à 9, **caractérisé en ce que** ledit module de modification de générateur de charge utile (4) peut générer le signal en sortie de manière interne ou peut modifier un signal qui est déjà présent en entrée.

11. Procédé selon l'une ou plusieurs des revendications 5 à 10, **caractérisé en ce que** ledit marqueur d'heure d'arrivée de référence (RTOA[N]) est généré par un module de verrouillage d'heure d'arrivée de référence (3).

12. Procédé selon une ou plusieurs des revendications 5 à 11, **caractérisé en ce que** ladite séquence d'heures d'arrivée de référence est présente dans le signal en sortie depuis le module de modification de générateur de charge utile (4) dans les positions qui sont reconnaissables par ledit module de démodulateur et de récepteur de satellite de référence (2).

13. Procédé selon la revendication 2, **caractérisé en ce que** ledit flux b) est généré à chaque fois que dans le signal en entrée qui arrive en provenance du dispositif de modification de générateur de charge utile (4) il existe, dans les positions qui sont connues à l'avance, l'heure de référence de séquence d'arrivée.

14. Procédé selon la revendication 2, **caractérisé en ce que** ledit module de génération de fréquence et d'heure de référence (1) est capable d'émettre constamment ladite valeur d'heure de référence (RTV) avec un haut degré de résolution.

15. Procédé selon la revendication 2, **caractérisé en ce que** ledit module de démodulateur et de récepteur de satellite de référence (2) produit ledit début de référence de marqueur temporel de charge utile (RSOP[N] à chaque fois que, dans le signal en entrée, il existe une séquence connue à l'avance qui contient la valeur d'heure de référence (RTV).

16. Procédé selon l'une ou plusieurs des revendications 2 à 9, **caractérisé en ce que** ledit module de démodulateur et de récepteur de satellite de référence (2) traite le signal en entrée d'une manière déterministe et avec un délai fixe entre le signal RF en entrée et la sortie du début de référence de marqueurs temporels de charge utile (RSOP[N]).

17. Procédé selon l'une ou plusieurs des revendications 2 à 10, **caractérisé en ce que** ledit module de démodulateur et de récepteur de satellite de référence (2) utilise, afin de générer le début de référence de marqueurs temporels de charge utile (RSOP) :

l'instant d'arrivée du paquet identifié par une paire d'ID de paquet de valeurs (PID) et un compteur de continuité (CC), si le signal en entrée est du type DVB-S, ou
l'instant d'arrivée de la trame BB qui a une valeur ISSY, si le signal en entrée est du type DVB-S2.

18. Procédé selon l'une ou plusieurs des revendications précédentes, **caractérisé en ce que** il comporte en outre une étape consistant à estimer la position du satellite (5) dans l'espace.

19. Système pour synchroniser au moins une boucle principale (10) avec un ou plusieurs générateurs disciplinés (11), comportant :

m machines de triangulation disciplinées (110), dont les horloges sont synchrones avec l'horloge de la boucle principale (10) et qui sont adaptées pour enregistrer les heures d'arrivée (ti) de signaux de synchronisation transmis par une machine principale (10) via un satellite (5), et pour transmettre celles-ci à un centre informatique (111),
les machines de triangulation disciplinées (110) étant adaptées pour calculer la différence entre l'heure d'arrivée dans la machine principale (10) et l'heure d'arrivée dans la machine de triangulation respective (110), ladite différence étant transmise audit centre informatique (111),
ladite boucle de référence (10) étant adaptée pour envoyer un signal de référence (30) au trajet de satellite (5),
ladite boucle principale (10) étant adaptée pour recevoir (14, 16) ledit signal de référence retransmis par le satellite (5),
ledit centre informatique (111) étant adapté pour déterminer la position du satellite (5) et rapporter lesdites informations à la machine principale (10), laquelle les transmet à son tour à tous les n générateurs disciplinés (11),
chacun desdits un ou plusieurs générateurs disciplinés (11) recevant (15, 22) ledit signal de référence (30) retransmis par le satellite (5) et modifiant la vitesse locale de l'heure de manière à synchroniser la transmission de tous les signaux transmis par les générateurs disciplinés (11) à d'autres utilisateurs avec le signal de référence (30) de la boucle principale (10),
chaque générateur discipliné (11), sur la base de la position du satellite (5), de sa propre position et de la position de ladite machine principale (10), étant adapté pour calculer et compenser ainsi les différences de trajet par rapport à la totalité des n générateurs disciplinés (11).

*Fig. 1*

MASTER LOOP

n DISCIPLINED GENERATORS

EP 2 493 094 B1

PGM SENDS SIGNAL CONTAINING RTOA

*12*

*13*

RSOP DETECTION ?   NO

*34*

YES

*14*   *15*

DELIVERY OF SIGNAL WITH RTOA TO RSRD

DELIVERY OF SIGNAL CONTAINING RTOA TO THE n DSRDs

*22*

RECEPTION OF SIGNAL CONTAINING RTOA

RECEPTION OF SIGNAL CONTAINING RTOA

*16*

*23*

ARE SYNTAX ELEMENTS CORRECT?   NO

IN SEQUENCE USED BY DSRD   NO

*17*   YES   *18*   *23b*   YES

RECEPTION OF RTV TIME REFERENCE

DTV RECEPTION

*24*

GENERATOR OF RSOP TIME MARKER

GENERATION OF DSOP, RTOA TIME MARKERS

*19*

RSOP TIME MARKER SAVED IN RTOA VARIABLE

*25*

SIGNAL PROCESSING

*20*

SENDING OF RTOA [N+1] TO PGM

*26*

EXTRACTION OF RTOA SEQUENCE FROM SIGNAL IN INPUT

*21*

*Fig.2*

*27*

DELIVERY OF RTOA SEQUENCE

END

Fig.3

EP 2 493 094 B1

Fig. 4

Fig.5

EP 2 493 094 B1

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006227043 A